# FASCICULE DE BREVET EUROPEEN

(11) **EP 1 951 565 B1**
(45) Date de publication et mention de la délivrance du brevet: **11.11.2009**
(21) Numéro de dépôt: 06831337.8
(22) Date de dépôt: 15.11.2006
(51) Int. Cl.: B62D 21/15

(54) **STRUCTURE DEFORMABLE DE LA PARTIE AVANT D'UN VEHICULE AUTOMOBILE**
VERFORMBARE STRUKTUR FÜR DAS VORDERTEIL EINES KRAFTFAHRZEUGS
DEFORMABLE STRUCTURE OF A MOTOR VEHICLE FRONT PART

(30) Priorité: 22.11.2005 FR 0511796
(43) Date de publication de la demande: 06.08.2008
(73) Titulaire: RENAULT S.A.S., 92100 Boulogne Billancourt (FR)
(72) Inventeur: VITRY, Bernard, F-ELANCOURT 78990 (FR)
(74) Mandataire: Guyon, Rodolphe C.
(86) Numéro de dépôt international: PCT/FR2006/051175
(87) Numéro de publication internationale: WO 2007/060355

(56) Documents cités:
- EP-A- 0 679 564
- EP-A- 1 069 027
- EP-A- 1 281 603
- WO-A-2005/023627
- DE-A1- 4 230 669
- DE-A1- 10 300 394
- FR-A- 2 120 386
- FR-A- 2 809 072
- FR-A- 2 857 932
- GB-A- 2 408 723
- PATENT ABSTRACTS OF JAPAN vol. 1997, no. 07, 31 juillet 1997 (1997-07-31) -& JP 09 086442 A (FUJI HEAVY IND LTD), 31 mars 1997 (1997-03-31)
- PATENT ABSTRACTS OF JAPAN vol. 1996, no. 10, 31 octobre 1996 (1996-10-31) -& JP 08 156827 A (DAIHATSU MOTOR CO LTD), 18 juin 1996 (1996-06-18)

## Description

L'invention concerne une structure déformable de la partie avant d'un véhicule automobile, notamment lors d'un choc frontal.

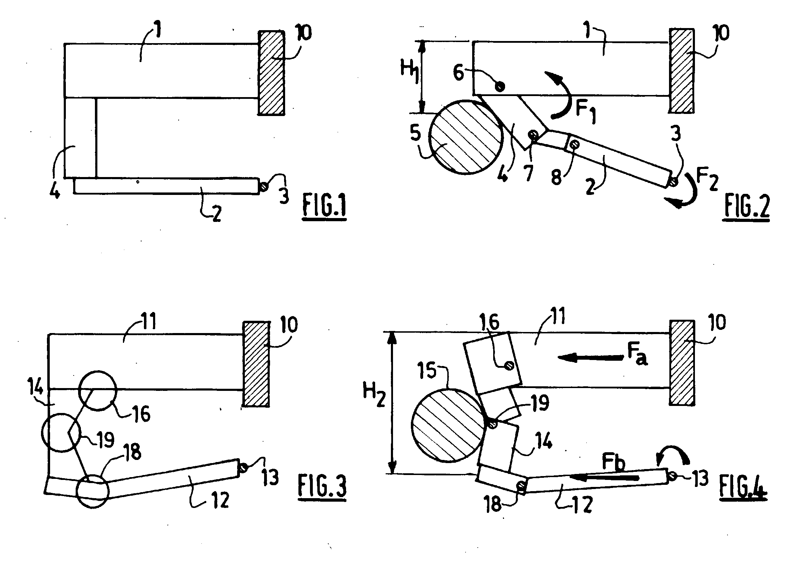

La figure 1 représente une structure de partie avant de véhicule automobile. Cette structure comprend deux longerons supérieurs 1 espacés reliés à la caisse 10 du véhicule, et deux longerons inférieurs 2 situés en avant d'un berceau (non représenté) dans un plan inférieur à celui des longerons supérieurs, et reliés au berceau au moyen d'une rotule 3. Les extrémités avant des longerons supérieurs 1 sont reliées chacune aux extrémités avant des longerons inférieurs 2 par un élément rigide vertical 4, généralement appelé pendeloque.

Avec une telle structure, lors d'un choc frontal symbolisé par la masse 5 sur la figure 2, cette masse 5 représentant une traverse avant ou une partie de la structure avant d'un véhicule impactant, la voie basse de la structure, formée par les longerons inférieurs 2, se démasque en direction des longerons supérieurs en raison de la formation de rotules plastiques, tel que représenté sur la figure 2. Deux rotules 6 et 7 se forment au niveau de la liaison entre l'élément rigide vertical 4 et les longerons supérieur 1 et inférieur 2, respectivement, une troisième rotule 8 se formant au niveau du longeron inférieur 2, à proximité de l'élément rigide vertical 4. Du fait de la formation de ces rotules plastiques, l'élément vertical bascule vers l'intérieur du véhicule tel que représenté par la flèche F1, provoquant la rotation du longeron inférieur 2 selon la flèche F2, par rotation autour de la rotule 3. La hauteur H₁ de la face d'appui (face supportant la majorité des efforts lors du choc) de la structure avant correspond alors sensiblement à la hauteur des longerons supérieurs. Or, plus la face d'appui est faible, plus le véhicule impacté peut devenir agressif pour le véhicule impactant. En effet, les longerons supérieurs ne se compactant pas, il y a un risque de ruiner rapidement la structure du véhicule impactant et d'induire une intrusion dans l'habitacle du véhicule impactant, ce qui peut générer des blessures aux occupants du véhicule impactant.

Afin de préserver au mieux les passagers, il est donc nécessaire de maîtriser la ruine des longerons supérieurs et inférieurs pour maximiser la surface d'appui après la ruine des longerons.

On connaît déjà des structures conformées de manière à limiter l'intrusion des longerons supérieurs à l'intérieur de l'habitacle d'un véhicule automobile. Ainsi, le document FR-2 809 072 décrit une structure avant qui comprend des moyens de déformation contrôlée des longerons supérieurs, qui consistent en des zones d'amorce situées au niveau des longerons supérieurs. De même, le document FR-2 857 932 décrit un longeron déformable. Dans les deux cas, les longerons se déforment lors d'un choc longitudinal afin de limiter la pénétration du longeron à l'intérieur de l'habitacle. Toutefois, seule une partie compressible située en avant du longeron permet de retarder la déformation du longeron causée par le choc.

Le but de l'invention est de limiter les imbrications entre les véhicules pour limiter l'intrusion dans l'habitacle

Notamment, l'objectif de l'invention est de réaliser une structure avant de véhicule automobile dont la déformation au cours d'un choc soit contrôlée de manière à maximiser la surface d'appui après la ruine des longerons, avec une répartition équivalente des efforts entre les longerons supérieurs et inférieurs.

A cet effet, l'objet de l'invention concerne une structure déformable de partie avant d'un véhicule automobile, comprenant deux longerons supérieurs espacés reliés à la caisse du véhicule, un berceau relié à la caisse du véhicule dans un plan inférieur à celui des longerons supérieurs, et deux longerons inférieurs situés en avant du berceau et reliés à celui-ci, les extrémités avant des longerons supérieurs étant reliées chacune aux extrémités avant des longerons inférieurs par un élément rigide vertical, **caractérisé en ce que**, en cas de choc frontal du véhicule, chaque élément rigide vertical est adapté pour pouvoir se déformer de façon à former un coude dont la convexité est dirigée vers l'intérieur du véhicule et chaque longeron est adapté pour pouvoir se déformer de façon à former un coude permettant à chaque longeron inférieur de s'éloigner du longeron supérieur correspondant, de sorte que les efforts supportés par chaque longeron soient sensiblement équivalents pour que la structure présente une surface d'appui maximale.

Ainsi, lors d'un choc frontal, les efforts sont répartis sur les longerons supérieurs et inférieurs, de sorte que la hauteur de la face d'appui correspond sensiblement à la distance entre longerons inférieurs et supérieurs. Il en résulte que une surface d'appui maximale après ruine des longerons.

De préférence, chaque élément rigide vertical est adapté de manière à pouvoir se déformer sensiblement à mi-hauteur entre les longerons supérieur et inférieur correspondants.

De préférence encore, chaque longeron est adapté de manière à pouvoir se déformer au niveau de sa liaison avec l'élément rigide vertical, en arrière de celui-ci.

Avantageusement, chaque élément rigide vertical et chaque longeron est pourvu d'une partie formant une rotule plastique, de manière à former lesdits coudes lors d'un choc frontal. Par rotule plastique, on désigne tout type d'assemblage ou de liaison entre deux parties, pouvant sous l'effet d'une force prédéterminée exercée dans la direction des deux parties, céder et provoquer une rotation angulaire entre les deux parties.

De préférence, dans le cas d'une structure de partie avant destinée à un véhicule présentant un long porte à faux, les extrémités arrières des longerons inférieurs sont reliées au berceau au moyen de rotules.

De préférence, dans le cas d'une structure de partie avant destinée à un véhicule présentant un court porte à faux, les extrémités arrière du berceau et des longerons supérieurs sont reliées à la caisse du véhicule au moyen de rotules.

Avantageusement, dans ce dernier cas, l'extrémité supérieure de chaque élément vertical présente dans la direction longitudinale du véhicule, une dimension supérieure à celle de l'extrémité inférieure du même élément. En effet, dans le cas d'un véhicule à court porte à faux, la structure avant va être stable et il sera plus difficile de la compacter. Un tel agencement permet de maximiser la surface d'appui lors d'un choc frontal renforçant la zone d'amorce formée par la rotule afin d'assurer un mécanisme de ruine robuste des longerons.

Avantageusement, les longerons inférieurs sont inclinés de sorte que leur extrémité avant, reliée à l'élément vertical soit plus haute que leur extrémité arrière, l'angle d'inclinaison par rapport à un plan horizontal étant tel que, lors d'un choc frontal, les longerons inférieurs s'étendent dans un plan sensiblement horizontal. Le placement du longeron inférieur sensiblement horizontalement lors du choc permet d'assurer une meilleure stabilité de la structure, tandis que sa position inclinée relevée avant un choc facilite au véhicule le passage d'obstacles divers au niveau du sol (trottoir, entrée de garage, gendarme couché...).

L'invention est maintenant décrite en référence aux dessins annexés, non limitatifs, dans lesquels :
- les figures 1 et 2 sont des représentations schématiques de côté d'une structure avant de véhicule selon l'art antérieur, avant et après un choc respectivement ;
- les figures 3 et 4 sont des représentations schématiques de côté d'une structure avant de véhicule selon l'invention, avant et après un choc respectivement ;
- les figures 5 , 6 et 7 sont des représentations schématiques de côté de divers modes de réalisation de structures avant de véhicule selon l'invention;
- les figures 8 et 9 sont des représentations schématiques de côté d'une structure avant de véhicule selon l'invention destinée à un véhicule à long porte à faux, avant et après un choc respectivement ;
- les figures 10 et 11 sont des représentations schématiques de côté d'une structure avant de véhicule selon l'invention destinée à un véhicule à court porte à faux, avant et après un choc respectivement.

La structure avant selon l'invention représentée figure 3 comprend deux longerons supérieurs 11 espacés reliés à la caisse 10 du véhicule, un berceau (non représenté sur les figures 3 et 4) relié à la caisse du véhicule dans un plan inférieur à celui des longerons supérieurs 11, et deux longerons inférieurs 12 situés en avant du berceau et reliés à celui-ci par une rotule 13, qui peut être une rotule plastique ou cinématique selon les véhicules. Les extrémités avant des longerons supérieurs 11 sont reliées chacune aux extrémités avant des longerons inférieurs 12 par un élément rigide vertical 14.

Selon l'invention, et tel que représenté sur la figure 4, chaque élément rigide vertical 14 comprend une partie 19 formant une rotule plastique, adaptée pour pouvoir se déformer de façon à former un coude dont la convexité est dirigée vers l'intérieur du véhicule. De même, chaque longeron supérieur 11 et inférieur 12 comprend une partie 16, 18, respectivement, formant une rotule plastique qui est adaptée pour pouvoir se déformer de façon à former un coude, permettant à chaque longeron inférieur 12 de s'éloigner du longeron supérieur 11 correspondant, de sorte que les efforts Fa, Fb supportés par chaque longeron 11, 12, respectivement, soient sensiblement équivalents jusqu'à la ruine de la structure lors d'un choc frontal (figure 4).

Dans le mode de réalisation représenté figure 3, la partie 19 formant une rotule plastique de chaque élément rigide vertical 14 est située sensiblement à mi-hauteur entre les longerons supérieur 11 et inférieur 12 correspondants. Dans cet exemple, il s'agit d'un changement de section, notamment d'une réduction locale de section par rapport à la section nominale au niveau des liaisons avec les longerons. Cette section réduite est localisée du côté de l'élément rigide 14 dirigé vers l'arrière du véhicule.

Les parties 16 et 18 formant une rotule plastique des longerons supérieur 11 et inférieur 12 respectivement, sont situées au niveau de leur liaison avec l'élément rigide vertical 14, en arrière de celui-ci.

Dans l'exemple, la partie 18 formant rotule plastique du longeron inférieur 12 est formée par un coude dont la convexité est dirigée à l'opposé du longeron supérieur 11.

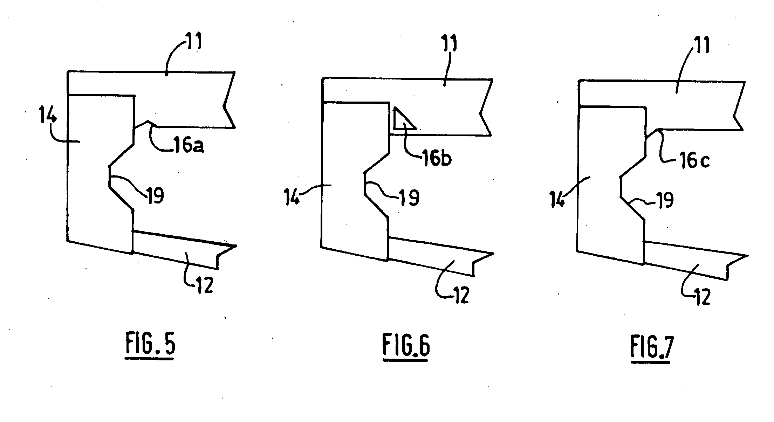

Des exemples de parties 16 formant rotule plastique du longeron supérieur, obtenues par modification locale de la géométrie du longeron, sont représentés sur les figures 5 à 7. Sur la figure 5, il s'agit d'une gorge 16a s'étendant transversalement au longeron 11, en regard du longeron inférieur 12 correspondant. Sur la figure 6, cette partie est formée par une lumière 16b de section triangulaire traversant le longeron 11 transversalement. Sur la figure 7, la partie est formée d'une réduction de section 16c du côté de la face du longeron en regard du longeron inférieur. Une telle rotule plastique peut également être amorcée par un changement de matière, ou tout autre moyen adapté.

Le comportement de la structure représentée sur la figure 3 lors d'un choc frontal est représenté sur la figure 4. Lorsqu'une masse 15 percute la structure selon l'invention, l'élément rigide vertical 14 plie sensiblement en son centre en direction de l'intérieur du véhicule. Sous l'effet du choc, les rotules plastiques 16 et 18 se forment sur chacun des longerons supérieur et inférieur, qui plient à leur tour de manière à provoquer l'écartement des longerons l'un de l'autre. Il en résulte une hauteur H₂ de la face d'appui de la masse 15 sensiblement égale à la hauteur entre les longerons inférieur 12 et supérieur 11. Les différentes parties formant rotules plastiques sont positionnées de sorte que les efforts Fa et Fb supportés par les longerons supérieur 11 et inférieur 12 restent sensiblement égaux jusqu'à la ruine des longerons.

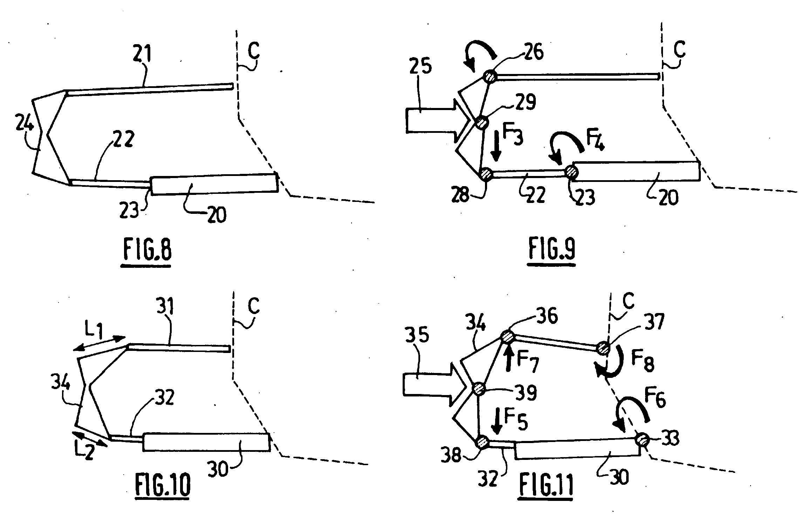

Un mode de réalisation particulier d'une structure avant destinée à un véhicule à long porte à faux est décrit en référence aux figures 8 et 9. Sur ces figures, l'habitacle du véhicule est délimité par la caisse du véhicule symbolisée par la ligne pointillée C. Deux longerons supérieurs 21 sont reliés chacun par un élément rigide vertical 24 à deux longerons inférieurs 22 situés en avant d'un berceau 20 auquel ils sont reliés par une rotule 23.

Lorsque le berceau 20 est un berceau en forme de cadre, cette rotule 23 est une rotule plastique, formée dans l'exemple par un changement de matière.

Lorsque le berceau 20 est un berceau en forme de U ouvert en direction des longerons inférieurs 22, cette rotule 23 est une rotule de liaison cinématique.

Dans les deux cas, le longeron inférieur 22 est incliné de sorte que son extrémité avant soit relevée.

L'élément rigide vertical 24 présente une réduction de section 29 sensiblement en son centre, chaque longeron 21, 22 comportant une partie 26, 28 déformable du type décrit précédemment en référence aux figures 3 à 7.

Ainsi, lors d'un choc frontal représenté par la flèche 25 sur la figure 9, l'élément rigide vertical 24 plie en son centre par rotation de ses parties supérieure et inférieure grâce aux rotules plastiques 26, 28 et 29, provoquant l'abaissement (flèche F3) de l'avant du longeron 22 par rotation autour de la rotule 23 (flèche F4). De ce fait, le longeron inférieur 22 devient horizontal assurant ainsi une meilleure stabilité à la structure.

Un autre mode de réalisation particulier d'une structure avant destinée à un véhicule à court porte à faux est maintenant décrit en référence aux figures 10 et 11. Sur ces figures, l'habitacle du véhicule est délimité par la caisse du véhicule symbolisée par la ligne pointillée C. Deux longerons supérieurs 31 sont reliés chacun par un élément rigide vertical 34 à deux longerons inférieurs 32 situés en avant d'un berceau 30 auquel ils sont reliés. Les extrémités arrière du berceau 30 sont reliées à la caisse par une rotule plastique 33, que le berceau 30 soit un berceau en forme de cadre ou en forme de U.

De même que précédemment, le longeron inférieur 32 est incliné de sorte que son extrémité avant soit relevée

Une rotule plastique 37 est également prévue au niveau de la fixation des longerons supérieurs 31 à la caisse C du véhicule.

L'élément rigide vertical 34 présente une réduction de section 39 sensiblement en son centre, chaque longeron 31, 32 comportant une partie 36, 38 déformable du type décrit précédemment en référence aux figures 3 à 7. De plus, l'extrémité supérieure de l'élément vertical 34 présente dans la direction longitudinale du véhicule, une dimension L1 supérieure à la dimension L2 de l'extrémité inférieure du même élément. Cette asymétrie de l'élément vertical 34 favorise la formation des rotules plastiques 36 et 38 au niveau des liaisons avec les longerons supérieur et inférieur.

Ainsi, lors d'un choc frontal représenté par la flèche 35 sur la figure 11, élément rigide vertical 34 plie en son centre par rotation de ses parties supérieure et inférieure l'une autour de l'autre grâce aux rotules plastiques 36, 38 et 39, provoquant d'une part, l'abaissement du longeron inférieur 32 (flèche F5) et du berceau 30 par rotation autour de la rotule 33 (flèche F6), et d'autre part, le relèvement (flèche F7) du longeron supérieur 31 par rotation autour de la rotule 37 (flèche F8). De ce fait, le longeron inférieur 32 devient horizontal.

Bien entendu, les différents modes de réalisation des parties formant rotule plastique décrits ci-dessus, à savoir un changement de section, un changement de matière, une lumière traversante, une rainure, ou un coude, ou d'autres modes non décrits, peuvent être utilisés indifféremment seuls ou en combinaison afin de provoquer l'apparition de chacune des rotules.

## Revendications

1. Structure déformable de partie avant d'un véhicule automobile, comprenant deux longerons supérieurs (11, 21, 31) espacés reliés à la caisse (10) du véhicule, un berceau relié à la caisse du véhicule dans un plan inférieur à celui des longerons supérieurs, et deux longerons inférieurs (12, 22, 32) situés en avant du berceau et reliés à celui-ci, les extrémités avant des longerons supérieurs étant reliées chacune aux extrémités avant des longerons inférieurs par un élément rigide vertical (14, 24, 34), **caractérisé en ce que**, en cas de choc frontal du véhicule, chaque élément rigide vertical est adapté pour pouvoir se déformer de façon à former un coude (19, 29, 39) dont la convexité est dirigée vers l'intérieur du véhicule, et chaque longeron (11, 12 ; 21, 22 ; 31, 32) est adapté pour pouvoir se déformer de façon à former un coude (16, 18 ; 26, 28 ; 36, 38) permettant à chaque longeron inférieur de s'éloigner du longeron supérieur correspondant, de sorte que les efforts (Fa, Fb) supportés par chaque longeron soient sensiblement équivalents pour que la structure présente une surface d'appui maximale.

2. Structure de la partie avant d'un véhicule automobile selon la revendication 1, dans laquelle chaque élément rigide vertical (14, 24, 34) est adapté de manière à pouvoir se déformer sensiblement à mi-hauteur entre les longerons supérieur (11, 21, 31) et inférieur (12, 22, 32) correspondants.

3. Structure de la partie avant d'un véhicule automobile selon la revendication 1 ou 2, dans laquelle chaque longeron (11, 12 ; 21, 22 ; 31, 32) est adapté de manière à pouvoir se déformer au niveau de sa liaison avec l'élément rigide vertical (14, 24, 34), en arrière de celui-ci.

4. Structure de la partie avant d'un véhicule automobile selon l'une des revendications 1 à 3, dans laquelle chaque élément rigide vertical (14, 24, 34) et chaque longeron (11, 12 ; 21, 22 ; 31, 32) est pourvu d'une partie formant une rotule plastique, de manière à former lesdits coudes lors d'un choc frontal.

5. Structure de la partie avant d'un véhicule automobile selon l'une des revendications 1 à 4, destinée à un véhicule présentant un long porte à faux, dans laquelle les extrémités arrières des longerons inférieurs (22) sont reliées au berceau (20) au moyen de rotules (23).

6. Structure de la partie avant d'un véhicule automobile selon l'une des revendications 1 à 4, destinée à un véhicule présentant un court porte à faux, dans laquelle les extrémités arrières du berceau (30) et des longerons supérieurs (31) sont reliées à la caisse du véhicule au moyen de rotules (33, 37).

7. Structure de la partie avant d'un véhicule automobile selon la revendication 6, dans laquelle l'extrémité supérieure de chaque élément vertical (34) présente dans la direction longitudinale du véhicule, une dimension (L1) supérieure à celle (L2) de l'extrémité inférieure du même élément.

8. Structure de la partie avant d'un véhicule automobile selon l'une des revendications 4 à 7, dans laquelle la partie formant rotule plastique est formée d'un changement de section, ou d'un changement de matière, ou d'une lumière traversante, ou d'une rainure, ou d'un coude, ou d'une combinaison de ceux-ci.

9. Structure de la partie avant d'un véhicule automobile selon l'une des revendications 1 à 8, dans laquelle les longerons inférieurs sont inclinés de sorte que leur extrémité avant, reliée à l'élément vertical soit plus haute que leur extrémité arrière, l'angle d'inclinaison par rapport à un plan horizontal étant tel que, lors d'un choc frontal, les longerons inférieurs s'étendent dans un plan sensiblement horizontal.

## Claims

1. Deformable structure of the front part of a motor vehicle comprising two spaced-apart upper side members (11, 21, 31) connected to the body (10) of the vehicle, a cradle connected to the body of the vehicle in a plane lower than the plane of the upper side members, and two lower side members (12, 22, 32) situated forward of the cradle and connected thereto, the front ends of the upper side members each being connected to the front ends of the lower side members by a vertical rigid element (14, 24, 34), **characterized in that**, if the vehicle is involved in a frontal impact, each vertical rigid element is designed to be able to deform in such a way as to form an elbow (19, 29, 39) the convex side of which faces the interior of the vehicle, and each side member (11, 12; 21, 22; 31, 32) is designed to be able to deform in such a way as to form an elbow (16, 18; 26, 28; 36, 38) allowing each lower side member to move away from the corresponding upper side member so that the load (Fa, Fb) to which each side member is subjected is substantially equivalent so that the structure displays a maximum bearing surface.

2. Structure of the front part of a motor vehicle according to Claim 1, in which each vertical rigid element (14, 24, 34) is designed to be able to deform substantially midway between the corresponding upper (11, 21, 31) and lower (12, 22, 32) side members.

3. Structure of the front part of a motor vehicle according to Claim 1 or 2, in which each side member (11, 12; 21, 22; 31, 32) is designed to be able to deform at its connection with the vertical rigid element (14, 24, 34), to the rear thereof.

4. Structure of the front part of a motor vehicle according to one of Claims 1 to 3, in which each vertical rigid element (14, 24, 34) and each side member (11, 12; 21, 22; 31, 32) is provided with a part that forms a plastic hinge so as to form said elbows in the event of a frontal impact.

5. Structure of the front part of a motor vehicle according to one of Claims 1 to 4, intended for a vehicle that has a long overhang, in which structure the rear ends of the lower side members (22) are connected to the cradle (20) by means of hinges (23).

6. Structure of the front part of a motor vehicle according to one of Claims 1 to 4, and intended for a vehicle having a short overhang, in which structure the rear ends of the cradle (30) and of the upper side members (31) are connected to the body of the vehicle by means of hinges (33, 37).

7. Structure of the front part of a motor vehicle according to Claim 6, in which the upper end of each vertical element (34) has, in the longitudinal direction of the vehicle, a dimension (L1) greater than that (L2) of the lower end of the same element.

8. Structure of the front part of a motor vehicle according to one of Claims 4 to 7, in which the part that forms a plastic hinge is formed of a change in cross section, or of a change in material, or of a through-hole, or of a slot, or of an elbow, or the combination of the above.

9. Structure of the front part of a motor vehicle according to one of Claims 1 to 8, in which the lower side members are inclined in such a way that their front end, connected to the vertical element, is higher up than their rear end, the angle of inclination with respect to a horizontal plane being such that, in the event of a frontal impact, the lower side members run in a substantially horizontal plane.

## Patentansprüche

1. Verformbare Vorderteilstruktur eines Kraftfahrzeugs, die zwei mit dem Aufbau (10) des Fahrzeugs verbundene, beabstandete obere Längsträger (11, 21, 31), eine mit dem Aufbau des Fahrzeugs verbundene Halterung in einer Ebene unter derjenigen der oberen Längsträger, und zwei untere Längsträger (12, 22, 32) enthält, die sich vor der Halterung befinden und mit dieser verbunden sind, wobei die vorderen Enden der oberen Längsträger je mit den vorderen Enden der unteren Längsträger über ein senkrechtes steifes Element (14, 24, 34) verbunden sind, **dadurch gekennzeichnet, dass** im Fall eines Frontalaufpralls des Fahrzeugs jedes senkrechte steife Element geeignet ist, um sich so verformen zu können, dass es einen Knick (19, 29, 39) bildet, dessen Konvexität zur Innenseite des Fahrzeugs gerichtet ist, und jeder Längsträger (11, 12; 21, 22; 31, 32) geeignet ist, um sich so verformen zu können, dass er einen Knick (16, 18; 26, 28; 36, 38) bildet, der es jedem unteren Längsträger ermöglicht, sich von dem entsprechenden oberen Längsträger zu entfernen, so dass die von jedem Längsträger erfahrenen Kräfte (Fa, Fb) im Wesentlichen gleichwertig sind, damit die Struktur eine maximale Auflagefläche aufweist.

2. Vorderteilstruktur eines Kraftfahrzeugs nach Anspruch 1, bei der jedes senkrechte steife Element (14, 24, 34) so angepasst ist, dass es sich im Wesentlichen auf halber Höhe zwischen dem oberen Längsträger (11, 21, 31) und dem entsprechenden unteren Längsträger (12, 22, 32) verformen kann.

3. Vorderteilstruktur eines Kraftfahrzeugs nach Anspruch 1 oder 2, bei der jeder Längsträger (11, 12; 21, 22; 31, 32) so angepasst ist, dass er sich in Höhe seiner Verbindung mit dem senkrechten steifen Element (14, 24, 34) hinter diesem verformen kann.

4. Vorderteilstruktur eines Kraftfahrzeugs nach einem der Ansprüche 1 bis 3, bei der jedes senkrechte steife Element (14, 24, 34) und jeder Längsträger (11, 12; 21, 22; 31, 32) mit einem Bereich versehen ist, der ein plastisches Gelenk bildet, um bei einem Frontalaufprall die Knicke zu bilden.

5. Vorderteilstruktur eines Kraftfahrzeugs nach einem der Ansprüche 1 bis 4, die für ein Fahrzeug bestimmt ist, das einen langen Überstand aufweist, bei der die hinteren Enden der unteren Längsträger (22) mit Hilfe von Gelenken (23) mit der Halterung (20) verbunden sind.

6. Vorderteilstruktur eines Kraftfahrzeugs nach einem der Ansprüche 1 bis 4, die für ein Fahrzeug bestimmt ist, das einen kurzen Überstand aufweist, bei der die hinteren Enden der Halterung (30) und der oberen Längsträger (31) mit Hilfe von Gelenken (33, 37) mit dem Aufbau des Fahrzeugs verbunden sind.

7. Vorderteilstruktur eines Kraftfahrzeugs nach Anspruch 6, bei der das obere Ende jedes senkrechten Elements (34) in der Längsrichtung des Fahrzeugs eine Abmessung (L1) größer als diejenige (L2) des unteren Endes des gleichen Elements aufweist.

8. Vorderteilstruktur eines Kraftfahrzeugs nach einem der Ansprüche 4 bis 7, bei der der ein plastisches Gelenk bildende Bereich von einer Querschnittsänderung oder von einer Materialänderung oder von einer Durchgangsöffnung oder von einer Rille oder von einem Knick oder von einer Kombination von diesen gebildet wird.

9. Vorderteilstruktur eines Kraftfahrzeugs nach einem der Ansprüche 1 bis 8, bei der die unteren Längsträger so geneigt sind, dass ihr mit dem senkrechten Element verbundenes vorderes Ende höher ist als ihr hinteres Ende, wobei der Neigungswinkel bezüglich einer waagrechten Ebene derart ist, dass die unteren Längsträger sich bei einem Frontalaufprall in einer im Wesentlichen waagrechten Ebene erstrecken.
